# EUROPÄISCHE PATENTANMELDUNG

(11) **EP 4 030 011 A1**
(43) Veröffentlichungstag der Anmeldung: **20.07.2022**
(21) Anmeldenummer: 22151587.7
(22) Anmeldetag: 14.01.2022
(51) Int. Cl.: E03D 11/14, E03D 11/17, F16L 27/02

(54) **TELESKOPIERBARER WC-ANSCHLUSS**

(30) Priorität: 14.01.2021 DE 102021100686
(71) Anmelder: TECE GmbH, 48282 Emsdetten (DE)
(72) Erfinder: Meiermann, André, 48159 Münster (DE); Krabbe, Martin, 48341 Altenberge (DE); Raupach, Philipp, 40599 Düsseldorf (DE)
(74) Vertreter: Lippert Stachow Patentanwälte Rechtsanwälte

(57) **Zusammenfassung**

Die Erfindung betrifft eine Anschlussgarnitur 200 zum Anschluss eines WC-Körpers 1. Der WC-Körper 1 weist einen Spülstutzen 11 und einen Ablaufstutzen 12 auf. Die Anschlussgarnitur 200 umfasst ein Spülanschlussrohr 21, das mit seinem ersten Längsende 2014 an den Spülstutzen 11 und mit seinem zweiten Längsende 2024 an einen gebäudeseitigen Spülanschluss 31 anschließbar ist sowie ein Ablaufanschlussrohr 22, das mit seinem ersten Längsende 2014 an einen gebäudeseitigen Ablaufanschluss 32 und mit seinem zweiten Längsende 2024 an den Ablaufstutzen 12 anschließbar ist. Zumindest eines dieser Anschlussrohre 21, 22 umfasst ein erstes Teilrohr 201, das das erste Längsende ausbildet sowie ein zweites Teilrohr 202, das das zweite Längsende ausbildet, wobei in einem Betriebszustand des jeweiligen Anschlussrohrs die Teilrohre 201, 202 zueinander verschiebbar ineinander gesteckt sind und eine Längserstreckungslänge des Anschlussrohrs zwischen seinen Längsenden 2014, 2024 durch eine Längsverschiebung der Teilrohre 201, 202 zueinander einstellbar ist.

## Beschreibung

Die Erfindung betrifft eine Anschlussgarnitur zum Anschluss eines WC-Körpers, ein Spülanschlussrohr für die Anschlussgarnitur, ein Ablaufanschlussrohr für die Anschlussgarnitur, einen WC-Körper und eine Verwendung der Anschlussgarnitur zur Montage des WC-Körpers.

Gattungsgemäße Anschlussgarnituren umfassen üblicherweise mehrere Anschlussrohre, von denen eines als Spülanschlussrohr und ein weiteres als Ablaufanschlussrohr ausgebildet ist. Die Anschlussrohre dienen der Bereitstellung einer fluidführenden Verbindung zwischen dem WC-Körper und Anschlüssen gebäudeseitiger Leitungen. Dabei ist üblicherweise eine erste gebäudeseitige Leitung als Abwasserleitung zum Abführen von Abwasser und eine zweite gebäudeseitige Leitung als Spülwasserleitung zur Bereitstellung von Spülwasser ausgebildet. Die Spülwasserleitung weist einen gebäudeseitigen Spülanschluss und die Abwasserleitung einen gebäudeseitigen Ablaufanschluss auf. Spülanschluss und Ablaufanschluss sind meist von einer Zugangsseite einer gebäudeseitigen Wand aus zugänglich, wobei es sich als zweckmäßig erwiesen hat, zumindest einen Abschnitt der Spülwasserleitung und Abwasserleitung hinter der Zugangsseite der gebäudeseitigen Wand verlaufen zu lassen, üblicherweise in einem Zwischenraum zwischen einer von der gebäudeseitigen Wand umfassten Vorwand, die die Zugangsseite ausbildet, und einer von der gebäudeseitigen Wand umfassten tragenden Wand, wobei in diesem Zwischenraum üblicherweise auch Spül- und Ablaufanschluss angeordnet sind.

Der WC-Körper ist üblicherweise in einem montierten Zustand an der gebäudeseitigen Wand lösbar befestigt. In dem montierten Zustand ist mittels der Anschlussgarnitur die fluidführende Verbindung des WC-Körpers zu dem gebäudeseitigen Spülanschluss und dem gebäudeseitigen Ablaufanschluss hergestellt. Der WC-Körper ist üblicherweise aus Keramik gefertigt und umfasst gewöhnlich zumindest einen jeweils vorzugsweise integral ausgebildeten Spülstutzen, einen Beckenabschnitt, insbesondere einen sich an den Beckenabschnitt anschließenden Siphonabschnitt und einen Ablaufstutzen. Der WC-Körper kann auch als Urinal ausgebildet sein. Der WC-Körper ist häufig dergestalt eingerichtet, dass ein Fluid, bevorzugt Spülwasser, welches über den Spülstutzen in den WC-Körper eintritt, bestimmungsgemäß in der genannten Reihenfolge den Beckenabschnitt, und den Siphonabschnitt passiert, bevor es über den Ablaufstutzen den WC-Körper wieder verlässt. Der Beckenabschnitt weist ein nach oben offenes Beckenvolumen auf, das von oben zugänglich ist, um eine Zuführung von menschlichen Ausscheidungen von oben in den Beckenabschnitt zu ermöglichen und dadurch das das oben erläuterte Spülwasser fließt, um vom Spülstutzen zum Ablaufstutzen zu gelangen. Bei einer Sitz-Toilette ist üblicherweise ein WC-Sitz oben auf dem Beckenabschnitt angeordnet. Der Spülstutzen ist eingerichtet, an ein erstes Längsende des Spülanschlussrohrs angeschlossen zu werden. Ferner ist der gebäudeseitige Spülanschluss eingerichtet, mit einem zweiten Längsende des Spülanschlussrohrs verbunden zu werden. Üblicherweise ist der gebäudeseitige Ablaufanschluss ausgebildet, mit einem ersten Längsende des Ablaufanschlussrohrs verbunden zu werden, wobei der Ablaufstutzen des WC-Körpers ausgebildet ist, mit einem zweiten Längsende des Ablaufanschlussrohrs verbunden zu werden. In dem montierten Zustand ist es ermöglicht, zum Spülen über den Spülstutzen Spülwasser in den WC-Körper einzuleiten und über den Ablaufstutzen Abwasser aus dem WC-Körper abzuführen. Bei dem Abwasser handelt es sich zumeist um Spülwasser und dem WC-Körper zugeführte Verschmutzungen, wie z. B. menschliche Ausscheidungen. Somit dient das Spülanschlussrohr zum Führen von Spülwasser und das Ablaufanschlussrohr zum Führen von Abwasser. Üblicherweise handelt es sich bei dem als Spülanschlussrohr oder als Ablaufanschlussrohr ausgebildeten Anschlussrohr um ein starres, also im Wesentlichen unflexibles Rohr, welches zumeist aus Kunststoff und/oder aus Metall ausgebildet ist. Häufig weist der Ablaufstutzen und insbesondere das Ablaufanschlussrohr einen größeren Querschnitt auf als der Spülstutzen und insbesondere das Spülanschlussrohr.

Zum Herstellen des montierten Zustands des WC-Körpers sind die Anschlussrohre der Anschlussgarnitur mit dem Spülanschluss und dem Spülstutzen sowie mit dem Ablaufanschluss und dem Ablaufstutzen zu verbinden, bevor der WC-Körper an der Wand befestigt wird. Da verschiedene bauliche Gegebenheiten, wie z. B. eine Wanddicke der Wand und/oder ein Abstand der gebäudeseitigen Anschlüsse von der Zugangsseite der Wand, einen Abstand des Spülstutzens von dem gebäudeseitigen Spülanschluss und einen Abstand des Ablaufstutzens von dem gebäudeseitigen Ablaufanschluss im montierten Zustand beeinflussen, werden die Anschlussrohre mit einer Längserstreckungslänge hergestellt, die über einen üblichen Abstand zwischen dem jeweiligen Stutzen und dem jeweiligen gebäudeseitigen Anschluss hinausgeht, wenn der WC-Körper an der Zugangsseite der Wand anliegend an dieser befestigt ist. Die Anschlussrohre sind somit vor dem Verbinden mit dem WC-Körper über den jeweiligen Stutzen und mit den gebäudeseitigen Leitungen über den jeweiligen Anschluss auf die tatsächlich erforderliche Längserstreckungslänge zu kürzen. Dazu wird zunächst das zu kürzende Anschlussrohr mit seinem Längsende an dem gebäudeseitigen Spülanschluss bzw. Ablaufanschluss befestigt und ein fluchtend mit der Zugangsseite der gebäudeseitigen Wand verlaufender Bereich des Anschlussrohrs mit einer ersten Markierung versehen, worauf das Anschlussrohr von dem gebäudeseitigen Spülanschluss bzw. Ablaufanschluss gelöst und mit dem dafür vorgesehenen Ablaufstutzen bzw. Spülstutzen verbunden wird, wobei ein Bereich des Anschlussrohrs, der fluchtend zu einer Anlagefläche des WC-Körpers, die in dem montierten Zustand an der Wand anliegt, mit einer zweiten Markierung versehen wird, worauf das Anschlussrohr ausgehend von einem seiner absoluten Längsenden um den Abstand zwischen der ersten und der zweiten Markierung gekürzt wird. Das Kürzen des jeweiligen Anschlussrohrs erfolgt beispielsweise durch Sägen, wobei ein Teil des jeweiligen Anschlussrohrs abgetrennt wird und zu entsorgen ist. Anschließend wird das bestimmungsgemäß gekürzte Anschlussrohr jeweils mit dem dafür vorgesehenen Stutzen verbunden, worauf mittels einer Fügebewegung gleichzeitig beide Anschlussrohre mit dem zugeordneten gebäudeseitigen Spülanschluss bzw. gebäudeseitigen Ablaufanschluss verbunden werden und der WC-Körper in den montierten Zustand gebracht wird.

Ein solches gattungsgemäßes Verfahren ist aufwendig und kann deshalb meist nur durch speziell ausgebildetes Personal durchgeführt werden. Es ist Werkzeug zum Kürzen der Anschlussrohre erforderlich und es fällt durch das Kürzen der Anschlussrohre Verschnitt an. Ferner ist bei Änderung der baulichen Gegebenheiten oder bei der Änderung des WC-Körpers, ebenso wie bei einem fehlerhaften Kürzen des Anschlussrohrs das jeweilige Anschlussrohr vollständig zu tauschen. Zudem birgt das gleichzeitig mit dem Befestigen des WC-Körpers in seiner in dem montierten Zustand bestimmungsgemäßen Position an der Wand ausgeführte Verbinden des WC-Körpers mit den gebäudeseitigen Leitungen das Risiko, dass eventuelle Undichtigkeiten und ein resultierender Flüssigkeitsaustritt nicht rechtzeitig festgestellt werden.

Aufgabe der vorliegenden Erfindung ist es, eine Anschlussgarnitur, ein Spülanschlussrohr, ein Ablaufanschlussrohr, einen WC-Körper und eine Verwendung der Anschlussgarnitur bereitzustellen, was zumindest einen der obengenannten Nachteile zumindest teilweise behebt.

Als eine Lösung dieser, der Erfindung zugrundeliegenden Aufgabe schlägt die Erfindung eine Anschlussgarnitur mit den Merkmalen gemäß Anspruch 1 zum Anschluss eines WC-Körpers an einen gebäudeseitigen Spülanschluss und an einen gebäudeseitigen Ablaufanschluss vor. Der WC-Körper weist einen Spülstutzen und einen Ablaufstutzen auf. Bevorzugt weisen der Spülstutzen und der Ablaufstutzen mit ihrer Öffnung in eine gleiche Richtung. Allgemein bilden der Spülstutzen und der Ablaufstutzen jeweils eine Öffnung des WC-Körpers aus, bevorzugt die einzigen an seiner Rückseite, mit der er bestimmungsgemäß an eine Wand montiert wird, vorgesehenen, mit dem Beckenvolumen fluidführend verbundenen Öffnungen, über die das Beckenvolumen ausgehend von der Rückseite von außen zugänglich ist. Die Anschlussgarnitur umfasst mehrere zur Fluidführung ausgebildete Anschlussrohre. Jedes der Anschlussrohre weist entlang einer Längsrichtung zwischen seinen Längsenden seine Längserstreckung auf. Jedes der Anschlussrohre weist eine in Längsrichtung verlaufende Längsachse auf, um die es sich mit seinem Rohrmantel geschlossen umlaufend erstreckt, wobei das jeweilige Anschlussrohr zur Führung eines Fluids entlang seiner Längsachse ausgebildet ist. Die Längsachse ist bevorzugt geradlinig, kann jedoch bei etagierten Anschlussrohren gestuft ausgebildet sein, verläuft auch dann in Längsrichtung zwischen den Längsenden. Bevorzugt erstrecken sich die Anschlussrohre jeweils geradlinig über mindestens 60%, insbesondere über mindestens 90 % ihrer Längserstreckung entlang ihrer Längsachse, insbesondere über ihre gesamte Längserstreckung entlang ihrer Längsachse. Dabei ist ein Anschlussrohr als Spülanschlussrohr ausgebildet, das insbesondere zwei unterschiedlich ausgebildete Längsenden aufweist, von denen ausschließlich das erste Längsende an den Spülstutzen und ausschließlich das zweite Längsende an einen gebäudeseitigen Spülanschluss fluidführend anschließbar ist. Ein weiteres der Anschlussrohre ist als Ablaufanschlussrohr ausgebildet, das insbesondere zwei unterschiedlich ausgebildete Längsenden aufweist, von denen ausschließlich das erste Längsende an einen gebäudeseitigen Ablaufanschluss und ausschließlich das zweite Längsende an den Ablaufstutzen des WC-Körpers anschließbar ist. Bevorzugt ist das Spülanschlussrohr durch Ineinanderstecken des ersten Längsendes des Spülanschlussrohrs und des Spülstutzens an den Spülstutzen und/oder durch ein Ineinanderstecken seines zweiten Längsendes und des gebäudeseitigen Spülanschlusses an den gebäudeseitigen Spülanschluss fluidführend anschließbar. Insbesondere ist das Ablaufanschlussrohr durch Ineinanderstecken seines ersten Längsendes und des gebäudeseitigen Ablaufanschlusses an den gebäudeseitigen Ablaufanschluss und/oder durch ein Ineinanderstecken seines zweiten Längsendes und des Ablaufstutzens an den Ablaufstutzen fluidführend anschließbar. Bevorzugt sind sämtliche Anschlussrohre mit dem WC-Körper lösbar verbindbar. In manchen Ausführungsformen ist zumindest eines der Anschlussrohre etagiert ausgeführt, wobei das erste Längsende des Anschlussrohrs bezogen auf eine Richtung senkrecht zu Längsrichtung exzentrisch zu dem zweiten Längsende angeordnet ist.

Erfindungsgemäß ist zumindest eines der Anschlussrohre, insbesondere das Ablaufanschlussrohr und das Spülanschlussrohr, mehrteilig ausgebildet. So umfasst dieses Anschlussrohr ein erstes Teilrohr, das das erste Längsende des Anschlussrohrs ausbildet, und ein zweites Teilrohr, das das zweite Längsende des Anschlussrohrs ausbildet. Bevorzugt bildet das erste Teilrohr das erste Längsende des Anschlussrohrs an seinem ersten Rohrende und das zweite Teilrohr das zweite Längsende des Anschlussrohrs an seinem ersten Rohrende aus, wobei ein zweites Rohrende des ersten Teilrohrs und ein zweites Rohrende des zweiten Teilrohrs zur lösbaren Verbindung, insbesondere durch Ineinanderstecken, des ersten Teilrohrs und des zweiten Teilrohrs miteinander korrespondierend ausgebildet sind. Insbesondere sind das erste Teilrohr und das zweite Teilrohr an ihren ersten Rohrenden formschlüssig miteinander verbindbar. In einem bestimmungsgemäßen Betriebszustand des Anschlussrohrs sind die Teilrohre des Anschlussrohrs zueinander verschiebbar, insbesondere durch das Verschieben auch lösbar, ineinandergesteckt. Es ist somit ein Abschnitt, d. h. Abschnitt in Längsrichtung, eines der Teilrohre in einen Abschnitt des anderen der Teilrohre gesteckt, so dass sich die Teilrohre mit ihren Abschnitten überlappen und durch das Ineinanderstecken eine Position der Teilrohre zueinander senkrecht zur Längsrichtung festgelegt ist. Bevorzugt verläuft die Längsachse des entsprechenden Anschlussrohres über diese beiden Abschnitte der Teilrohre hinweg geradlinig. In dem Betriebszustand sind vorzugsweise sämtliche Bestandteile des Anschlussrohrs miteinander verbunden unter Gewährleistung der fluidführenden Eigenschaft des Anschlussrohres, dank derer das Anschlussrohr zum fluidführenden Verbinden des gebäudeseitigen Spül- bzw. Ablaufanschlusses mit dem Spül- bzw. Ablaufstutzen geeignet ist. Dabei sind die Teilrohre des sich in dem Betriebszustand befindenden Anschlussrohrs, während sie miteinander fluiddicht verbunden sind und bleiben, relativ zueinander entlang der Längsrichtung und insbesondere um die Längsachse bewegbar unter Annahme verschiedener Betriebspositionen, wobei allgemein eine Betriebsposition eine bestimmte Lage der beiden Teilrohre relativ zueinander in dem Betriebszustand definiert. In dem Betriebszustand ist eine Längserstreckungslänge des Anschlussrohrs zwischen seinen Längsenden durch eine Längsverschiebung der Teilrohre zueinander einstellbar. Dabei ist allgemein auf eine Übereinstimmung der Längsrichtung des Anschlussrohrs und der Längsrichtung seiner Teilrohre abgestellt. Insbesondere sind das erste Längsende des Anschlussrohrs und das zweite Längsende des Anschlussrohrs in dem bestimmungsgemäßen Betriebszustand fluchtend zueinander angeordnet. Die Längserstreckungslänge des Anschlussrohrs ist allgemein bezogen auf dessen Erstreckung zwischen dem ersten Längsende und dem zweiten Längsende des Anschlussrohrs in Längsrichtung. Bevorzugt bezieht sich die Längsverschiebung der Teilrohre ausschließlich auf eine Verschiebung der Teilrohre relativ zueinander in Längsrichtung, die entsprechend durch keine andere Bewegungsart überlagert ist. Insbesondere ist die Längserstreckungslänge des Anschlussrohrs durch die Längsverschiebung der Teilrohre zueinander kontinuierlich einstellbar. Damit ist gemeint, dass die Änderung der Längserstreckungslänge durch die Längsverschiebung der Teilrohre zueinander nicht diskret ist, sondern über jede beliebige Strecke zwischen zwei Betriebspositionen erfolgen kann. Selbstverständlich weisen beide Längsenden eines Anschlussrohrs eine Rohröffnung auf, wobei ebenso selbstverständlich die beiden Rohrenden eines Teilrohrs eine Rohröffnung aufweisen. Insbesondere weisen die Teilrohre als einzige Rohröffnungen ausschließlich an jedem ihrer beiden Rohrenden jeweils genau eine Rohröffnung auf. Mit einer Rohröffnung ist eine für einen Fluiddurchtritt vorgesehene Öffnung zum Innenraum des jeweiligen Teilrohrs bzw. des jeweiligen Anschlussrohrs gemeint. Bevorzugt liegen die Teilrohre in dem Betriebszustand unmittelbar aneinander an. Insbesondere liegen in unterschiedlichen Betriebspositionen jeweils unterschiedliche Abschnitte der Teilrohre aneinander an, die sich in ihrer Längserstreckungslänge unterscheiden. Insbesondere weisen das erste und zweite Längsende des Anschlussrohrs sowie erstes und zweites Rohrende eine jeden Teilrohres im Betriebszustand in jeweils entgegengesetzte Richtungen entlang der Längsrichtung. Bevorzugt weist das zweite Rohrende des ersten Teilrohrs in dem Betriebszustand in Richtung des zweiten Längsendes des Anschlussrohrs und das zweite Rohrende des zweiten Teilrohrs in dem Betriebszustand in Richtung des ersten Längsendes des Anschlussrohrs. Bevorzugt ist zumindest eines der Teilrohre rotationssymmetrisch ausgeführt, wobei auf eine Rotationsachse abgestellt ist, die entlang der Längsrichtung verläuft.

Die erfindungsgemäße Anschlussgarnitur bringt eine Vielzahl an Vorteilen mit sich. So ist es ermöglicht, den WC-Körper ohne die sonst übliche mechanische Bearbeitung des Anschlussrohrs mit dem gebäudeseitigen Ablaufanschluss bzw. mit dem gebäudeseitigen Spülanschluss zu verbinden. Somit ist der dazu erforderliche Aufwand reduziert und zugleich eine bei einer mechanischen Bearbeitung der Anschlussrohre bestehende Verletzungsgefahr ausgeschlossen. Ferner ist gegenüber gattungsgemäßen Anschlussgarnituren eine Einstellbarkeit zumindest eines der Anschlussrohre gewährleistet, wobei über die gesamte einstellbare Längserstreckungslänge eine fluiddichte Verbindung zwischen dem ersten Teilrohr und dem zweiten Teilrohr gewährleistet ist. Entsprechend sind für die Montage des WC-Körpers mittels der erfindungsgemäßen Anschlussgarnitur weniger Fachkenntnis und Erfahrung notwendig als bei der Verwendung von gattungsgemäßen Anschlussgarnituren. Bevorzugt ist mit der erfindungsgemäßen Anschlussgarnitur ermöglicht, zunächst eines der Teilrohre mit dem gebäudeseitigen Spülanschluss bzw. Ablaufanschluss und ein anderes der Teilrohre mit dem Spülstutzen bzw. dem Ablaufstutzen zu verbinden und erst danach die beiden Teilrohre durch Ineinanderstecken ihrer ersten Rohrenden miteinander zu verbinden und den Betriebszustand zu realisieren und in dem betriebszustand eine gewünschte Längserstreckungslänge des Anschlussrohrs zwischen seinen Längsenden durch die Längsverschiebung der Teilrohre zueinander einzustellen. Hierdurch ist auf besonders einfache Weise eine besonders zuverlässig fluiddichte Verbindung des Spül- bzw. Ablaufanschlusses mit dem Spül- bzw. Ablaufstutzen ermöglicht, da zuerst die jeweiligen Teilrohre fluiddicht auf den jeweiligen Anschluss gesteckt werden können und anschließend das Zusammenführen der Teilrohre mit ihren ersten Rohrenden visuell überwacht werden kann. Ferner haben die Erfinder erkannt, dass durch die erfindungsgemäße Ausgestaltung des Anschlussrohres das Anschlussrohr einen überraschend niedrigen Fließwiderstand aufweist, so dass die erfindungsgemäße Anschlussgarnitur auch zur Verwendung bei WC-Körpern wassersparender Toiletten geeignet ist.

In einer bevorzugten Ausführungsform weisen die Teilrohre jeweils einen Teleskopabschnitt auf. Insbesondere umfasst der Teleskopabschnitt ein durch das Teilrohr ausgebildetes, längsseitiges zweites Rohrende, das einem ersten Rohrende des Teilrohres in Längsrichtung gegenüberliegt, mit dem das Teilrohr ein Längsende des Anschlussrohres ausbildet. In dem Betriebszustand des Anschlussrohrs ist eines der beiden Teilrohre mit seinem Teleskopabschnitt in dem Teleskopabschnitt des anderen Teilrohrs angeordnet. Insbesondere sind die Teilrohre dergestalt korrespondierend ausgebildet, dass sie, wenn sie in dem Betriebszustand angeordnet sind, über einen Weg, der der gesamten Längserstreckung eines jeden der Teleskopabschnitte entspricht, zueinander verschiebbar sind. In dem Betriebszustand sind die Teilrohre zwischen einer ersten Betriebsposition, in der das Anschlussrohr eine maximal vorgesehene Längserstreckungslänge aufweist, und einer zweiten Betriebsposition, in der das Anschlussrohr eine minimal vorgesehene Längserstreckungslänge aufweist, durch die Längsverschiebung relativ zueinander in Längsrichtung verschiebbar. Bevorzugt erfolgt die Längsverschiebung von der ersten zur zweiten Betriebsposition über eine Längsverschiebungslänge, die mindestens 30 % der Längserstreckungslänge des Anschlussrohres in der zweiten Betriebsposition entspricht. Insbesondere beträgt eine Differenz zwischen der maximal vorgesehenen Längserstreckungslänge und der minimal vorgesehenen Längserstreckungslänge des Anschlussrohres bezogen auf die Längsrichtung und somit die Längsverschiebungslänge zumindest 30 mm, insbesondere zumindest 50 mm, und insbesondere weniger als 20 cm. Insbesondere sind das erste Teilrohr und das zweite Teilrohr bei einer Längsverschiebung, die über die maximal vorgesehene Längserstreckungslänge des Anschlussrohres hinausgeht, voneinander unter Verlassen des Betriebszustands trennbar. Bevorzugt sind in dem Betriebszustand die beiden Teilrohre dergestalt ineinander gesteckt, dass einer der Teleskopabschnitte den anderen bezogen auf eine Richtung senkrecht zur Längsrichtung vollständig umschließt. Bevorzugt ist in der zweiten Betriebsposition das zweite Rohrende eines jeden Teilrohres um weniger als 30 % der Längserstreckungslänge des anderen Teilrohres von dessen ersten Rohrende beabstandet. In einer Ausführungsform weisen die Teilrohre jeweils eine unveränderliche Längserstreckungslänge auf, in einer anderen Ausführungsform weist zumindest eines der Teilrohre eine veränderliche Längserstreckungslänge auf, beispielsweise indem es selbst zwei Unterteilrohre aufweist, die zueinander verschiebbar sind. Durch das Vorsehen der Teleskopabschnitte sind definierte Abschnitte geschaffen, innerhalb deren Längserstreckung das erste Teilrohr relativ zu dem zweiten Teilrohr im Betriebszustand durch die Längsverschiebung verschiebbar ist.

In einer bevorzugten Ausführungsform weist zumindest einer der Teleskopabschnitte über mindestens 70 %, insbesondere mindestens 80 %, insbesondere mindestens 90 %, seiner Längserstreckungslänge hinweg eine gleiche Außenkontur und/oder eine gleiche Innenkontur auf. Allgemein wird unter einer Längserstreckungslänge des Teleskopabschnitts die betragsmäßige Länge der Erstreckung des Teleskopabschnitts in Längsrichtung verstanden, mit dem er in der zweiten Betriebsposition mit dem anderen Teilrohr in Längsrichtung überlappt. Insbesondere weist der Teleskopabschnitt eines Teilrohrs über den oben erläuterten Anteil seiner Längserstreckungslänge hinweg eine konstante, gleiche Innenkontur, insbesondere mit einem konstanten Innendurchmesser, auf, wobei der Teleskopabschnitt des anderen dem gleichen Anschlussrohr zugeordneten Teilrohrs über seinen oben erläuterten Anteil seiner Längserstreckungslänge hinweg eine konstante, gleiche Außenkontur, insbesondere mit einem konstanten Außendurchmesser, aufweist. Insbesondere weist zumindest einer der Teleskopabschnitte über seinen oben erläuterten Anteil seiner Längserstreckungslänge hinweg einen gleichen, senkrecht zur Längsrichtung verlaufenden Querschnitt auf. Insbesondere unterscheiden sich Innendurchmesser und Außendurchmesser von zumindest einem der Teleskopabschnitte, insbesondere von beiden Teleskopabschnitten um weniger als 10 mm, insbesondere weniger als 5 mm, insbesondere weniger als 3 mm, wobei auf einen mittleren Durchmesser über die Längserstreckungslänge des Teleskopabschnitts, hinweg, abgestellt ist. Durch das Vorsehen einer gleichen Kontur ist eine einfache Längsverschiebbarkeit des ersten Teilrohrs relativ zu dem zweiten Teilrohr innerhalb der Erstreckung des jeweiligen Teleskopabschnitts realisiert, wobei insbesondere ein Verkanten der ineinander gesteckten Teilrohre vermieden ist. Ferner ist durch eine wie vorgenannt korrespondierend ausgebildete Kontur der jeweiligen Teleskopabschnitte das Risiko einer Beschädigung der Teilrohre innerhalb ihrer Teleskopabschnitte durch die Längsverschiebung relativ zueinander erheblich vermindert.

Bevorzugt ist der Teleskopabschnitt des ersten Teilrohrs starr mit dem ersten Längsende des Anschlussrohrs verbunden und/oder der Teleskopabschnitt des zweiten Teilrohrs starr mit dem zweiten Längsende des Anschlussrohrs verbunden. Insbesondere ist das erste Teilrohr als einstückiges Bauteil hergestellt. Insbesondere ist das zweite Teilrohr als einstückiges Bauteil hergestellt. Unter starr wird im obenstehenden Zusammenhang verstanden, dass eine relative Beweglichkeit nicht über ein vernachlässigbares Maß, das insbesondere durch eine materialabhängige Elastizität bedingt ist, hinausgeht. Insbesondere sind die beiden Rohrenden des ersten Teilrohrs in dem Betriebszustand ausschließlich relativ zu den beiden Rohrenden des zweiten Teilrohrs, also nicht relativ zueinander, beweglich. Bevorzugt ist damit eine Deformation des ersten Teilrohrs und/oder des zweiten Teilrohrs, beispielsweise zur Veränderung der Erstreckung des jeweiligen Teilrohrs, ausgeschlossen. Durch die starre Verbindung des Teleskopabschnitts des jeweiligen Teilrohrs relativ zu dem von dem jeweiligen Teilrohr ausgebildeten Längsende ist auf einfache Weise sichergestellt, dass eine Längsverschiebung der Teleskopabschnitte der Teilrohre relativ zueinander mit einer Längsverschiebung der Längsenden des Anschlussrohrs relativ zueinander einhergeht. Bevorzugt sind die zweiten Rohrenden der Teilrohre, insbesondere ihre Teleskopabschnitte, dergestalt zueinander korrespondierend ausgestaltet, dass in der zweiten und insbesondere in der ersten Betriebsposition ein Verkippen der Teilrohre zueinander um eine senkrecht zur Längsrichtung verlaufenden Kippachse auf einen Verkippwinkel von weniger als 30°, insbesondere weniger als 20°, insbesondere weniger als 10° beschränkt ist und insbesondere nach Möglichkeit vermieden ist.

Gemäß einer bevorzugten Ausführungsform umfasst die Anschlussgarnitur ferner eine ringförmige Rohrdichtung, die dem zumindest einen Anschlussrohr zugeordnet ist, sich vorzugsweise um dessen Längsachse erstreckt, und die die beiden Teilrohre des Anschlussrohrs zueinander in dem Betriebszustand fluiddicht, insbesondere gegen eine an eine Außenseite des Ablaufanschlussrohrs und des Spülanschlussrohrs angrenzende Umgebung, verbindet. Bevorzugt ist die Rohrdichtung separat von den Teilrohren ausgebildet. Bevorzugt ist die ringförmige Rohrdichtung an einem der beiden Teilrohre, insbesondere in dem Teleskopabschnitt des jeweiligen Teilrohrs, insbesondere formschlüssig, festgelegt und erstreckt sich, bevorzugt ununterbrochen, um zumindest eines der beiden Teilrohre. Bevorzugt ist die Rohrdichtung aus einem gummielastischen Material, insbesondere einem Elastomer, gefertigt, wobei die Teilrohre aus einem steiferen Material als die Rohrdichtung hergestellt sind. Insbesondere ist die Rohrdichtung einteilig hergestellt. Bevorzugt weist die Rohrdichtung einen geringeren Innendurchmesser auf als der Außendurchmesser eines der Teleskopabschnitte, und/oder einen größeren Außendurchmesser auf als der Innendurchmesser eines der Teleskopabschnitte, wobei jeweils auf eine Ruhelage der Rohrdichtung abgestellt ist, bei der keine äußeren Kräfte auf diese Rohrdichtung wirken. Bevorzugt ist in dem Betriebszustand die Rohrdichtung zwischen dem ersten Teilrohr und dem zweiten Teilrohr angeordnet und liegt fluiddicht an beiden Teilrohren an. Insbesondere ist die Rohrdichtung in dem Betriebszustand relativ zu einem der Teilrohre entlang der Längsrichtung verschiebbar unter Beibehaltung seiner fluiddichten Anlage an beiden Teilrohren und insbesondere an dem anderen der Teilrohre positionsfest fixiert. Insbesondere ist die Rohrdichtung in dem Betriebszustand an das erste Teilrohr und an das zweite Teilrohr angepresst. Durch das Vorsehen einer Rohrdichtung mit wie oben erläuterten Merkmalen ist im Betriebszustand auf einfache Weise eine fluiddichte Verbindung mittels der Rohrdichtung zwischen dem ersten Teilrohr und dem zweiten Teilrohr gewährleistet.

In einer vorteilhaften Ausführungsform, in der die Teilrohre jeweils das erste und das zweite Rohrende aufweisen, sind die zweiten Rohrenden der Teilrohre zueinander korrespondierend ausgebildet und die beiden Teilrohre in dem Betriebszustand mit ihren beiden zweiten Rohrenden ineinander gesteckt. Bevorzugt ist in jeder Betriebsposition das zweite Rohrende des ersten Teilrohrs von dem zweiten Rohrende des zweiten Teilrohrs in Längsrichtung beabstandet. Bevorzugt sind die zweiten Rohrenden der Teilrohre zum Trennen der Teilrohre voneinander aneinander vorbeizuführen. Die ersten Rohrenden der Teilrohre sind unterschiedlich zueinander und jeweils unterschiedlich zu den zweiten Rohrenden beider Rohrteile ausgebildet. Dabei sind vorzugsweise ausschließlich die beiden zweiten Rohrenden als zueinander korrespondierende Rohrenden ausgebildet. Bevorzugt ist dadurch eine, insbesondere unmittelbare, Verbindbarkeit der ersten Rohrenden der Teilrohre miteinander und/oder der ersten Rohrenden mit zumindest einem der zweiten Rohrenden ausgeschlossen. Insbesondere bilden die Teilrohre an ihren ersten Rohrenden jeweils ein Längsende des jeweiligen Anschlussrohrs aus. Bevorzugt umfasst das Ablaufanschlussrohr das erste und das zweite Teilrohr, wobei das erste Rohrende des ersten Teilrohrs ausschließlich an den gebäudeseitigen Ablaufanschluss und/oder das erste Rohrende des zweiten Teilrohrs ausschließlich an den Ablaufstutzen anschließbar ist. In einer alternativen bevorzugen Ausführungsform umfasst das Spülanschlussrohr das erste und das zweite Teilrohr, wobei das erste Rohrende des ersten Teilrohrs ausschließlich an den Spülstutzen und/oder das erste Rohrende des zweiten Teilrohrs ausschließlich an dem gebäudeseitigen Spülanschluss anschließbar ist. In einer bevorzugten Ausführungsform sind Spülanschlussrohr und Ablaufanschlussrohr jeweils als wie erläutert erstes und zweites Teilrohr umfassend ausgebildet, wobei die vorgenannten beiden alternativen Ausführungsformen bevorzugt in dieser Ausführungsform kombiniert sind. Vorzugsweise sind sämtliche Rohrenden des ersten und des zweiten Teilrohrs unterschiedlich ausgebildet. Bevorzugt ist das erste Rohrende des ersten Teilrohrs gegen ein Verbinden inkompatibel zu sämtlichen weiteren der Rohrenden ausgebildet und das erste Rohrende des zweiten Teilrohrs gegen ein Verbinden inkompatibel zu sämtlichen weiteren Rohrenden ausgebildet. Durch die wie vorstehend erläutert ausgebildeten Rohrenden des ersten und des zweiten Teilrohrs ist eine von seiner Bestimmung abweichende Verbindung der Teilrohre miteinander effektiv vermieden.

In einer bevorzugten Ausführungsform ist die Rohrdichtung positionsfest an einem von dem durch das erste Teilrohr ausgebildeten Längsende des Anschlussrohrs, insbesondere um zumindest 50 %, insbesondere um zumindest 70 % der Längserstreckungslänge des ersten Teilrohrs, beabstandeten Abschnitt des ersten Teilrohrs oder an dem von dem durch das zweite Teilrohr ausgebildeten Längsende des Anschlussrohrs, insbesondere um zumindest 50 %, insbesondere um zumindest 70 % der Längserstreckungslänge des zweiten Teilrohrs, beabstandeten Abschnitt des zweiten Teilrohrs angeordnet. Durch eine solche Anordnung ist eine verbesserte Verschiebbarkeit der Teilrohre zueinander gewährleistet und zugleich ein Verkippen der Teilrohre zueinander zumindest vermindert. Bevorzugt weist das erste oder das zweite Teilrohr eine umlaufende Nut auf, wobei die Rohrdichtung im Betriebszustand in die umlaufende Nut eingefügt ist unter Festlegung der Position der Rohrdichtung relativ zu dem diese umlaufende Nut ausbildenden Teilrohr. In vorteilhaften Ausführungsformen ist, bevorzugt zusätzlich, die Rohrdichtung mit dem entsprechenden Teilrohr stoffschlüssig verbunden.

In einer besonders bevorzugten Ausführungsform sind das erste Teilrohr und das zweite Teilrohr separat voneinander ausgebildet und in dem Betriebszustand lösbar miteinander verbunden. Ausgehend von diesem Betriebszustand sind die Teilrohre durch Ausführung der Längsverschiebung über eine Position, in der das Anschlussrohr seine maximale Längserstreckungslänge aufweist, hinaus voneinander trennbar. Bevorzugt sind die Teilrohre, ausgehend von einem Montagezustand, in dem die Teilrohre in Längsrichtung voneinander beabstandet sind, mittels einer, insbesondere ausschließlich in Längsrichtung verlaufenden, Fügebewegung ineinander steckbar zum Erreichen des Betriebszustands. Vorzugsweise sind die Teilrohre mittels einer, insbesondere ununterbrochenen, insbesondere geradlinigen, Trennbewegung trennbar, die der Fügebewegung entgegengerichtet ist. Insbesondere weist zumindest eines der Teilrohre an seinem in dem Betriebszustand mit dem anderen Teilrohr überlappenden Rohrende und somit seinem zweiten Rohrende, insbesondere innerhalb seines Teleskopabschnitts, eine vorzugsweise um die Rohrachse verlaufende, insbesondere ununterbrochen umlaufende Einlaufschräge auf. Die Einlaufschräge dient dem zunehmenden Aufbau einer zwischen dem die Einlaufschräge aufweisenden Teilrohr und der Rohrdichtung wirkenden Presskraft während der Fügebewegung. Während zumindest eines Teils der Fügebewegung liegt die Rohrdichtung dazu an der umlaufenden Einlaufschräge an und gleitet vorzugsweise an dieser entlang, wobei die Rohrdichtung an der Einlaufschräge zusammengepresst wird unter Aufbau der Presskraft auf die Rohrdichtung. Bevorzugt sind die Teilrohre durch Aufbringung einer in Längsrichtung wirkenden externen Fügekraft ineinander steckbar, wobei insbesondere die Fügekraft von der umlaufenden Einlaufschräge in die auf die Rohrdichtung wirkende Presskraft übersetzbar ist. Insbesondere verläuft die Einlaufschräge mit Bezug auf die Längsachse des Teilrohrs in einem Winkel von zumindest 2 °, insbesondere von zumindest 5 °, insbesondere von zumindest 10 °, insbesondere bis zu dem zweiten Rohrende, wobei auf einen mittleren Winkel abgestellt ist. Insbesondere überragt die Einlaufschräge mit ihrer Erstreckung senkrecht zur Längsrichtung die Erstreckung der Rohrdichtung senkrecht zur Längsrichtung. Durch das Vorsehen einer wie oben erläuterten Einlaufschräge ist ein besonders einfaches Fügen der Teilrohre und der Rohrdichtung ermöglicht unter zuverlässiger Realisierung der fluiddichten Verbindung zwischen den beiden Teilrohren.

In einer vorteilhaften Ausführungsform weist das Ablaufanschlussrohr an seinem ersten Längsende einen Rohranschluss auf zum Verbinden, insbesondere zur unmittelbaren Steckverbindung, mit einem gemäß DN90-normierten gebäudeseitigen Ablaufanschluss auf. Bevorzugt ist das Ablaufanschlussrohr dergestalt ausgebildet, dass es zur Verwendung in Anwendungen, insbesondere bei wassersparenden Toiletten, in denen ein mit DN90-normiertes Ablaufanschlussrohr vorgeschrieben oder empfohlen ist, geeignet ist. Unter einer wassersparenden Toilette wird allgemein eine Toilette verstanden, deren WC-Körper nach Benutzung durch Spülen mit einer Spülwassermenge von 6 1 oder weniger möglichst vollständig reinigbar ist. Insbesondere ist bei einer gemäß DN90-normierten Ausführung abgestellt auf einen normgerechten freien Querschnitt, der senkrecht zur Längsrichtung verläuft, der einen Teil eines vollständig umschlossenen Innenraums abbildet und durch den ein Fluid hindurchtreten kann. Bevorzugt ist ein zwischen seinen Längsenden durchgehender freier Querschnitt des Ablaufanschlussrohrs zumindest so groß, insbesondere größer als ein freier Querschnitt des Ablaufstutzens. In einer bevorzugten Ausführungsform weist das Ablaufanschlussrohr an seinem zweiten Längsende einen Rohranschluss zum Verbinden mit einem gemäß DN90-normierten Ablaufstutzen auf, insbesondere zur unmittelbaren Steckverbindung. Durch die vorstehend erläuterten Ausführungsformen und deren Kombinationen ist es ermöglicht, das Ablaufanschlussrohr an eine Vielzahl bestehender und DN90-normierter gebäudeseitiger Ablaufanschlüsse bzw. einer Vielzahl bestehender und normierter Ablaufstutzen anzuschließen zur Gewährleistung einer hohen Kompatibilität.

In einer bevorzugten Ausführungsform weist zumindest eines der Teilrohre an dem von ihm ausgebildeten Längsende des Anschlussrohrs eine, insbesondere topf- oder flanschförmige, Auskragung auf, an der, insbesondere im Betriebszustand, eine Dichtmanschette befestigt ist. Bevorzugt ist diese Dichtmanschette einstückig ausgebildet, insbesondere aus einem gummielastischen Material, beispielsweise aus einem, insbesondere thermoplastischen, Elastomer. Insbesondere ist die Dichtmanschette dergestalt ausgebildet, dass für eine Verformung in Längsrichtung eine betragsmäßig geringere in Längsrichtung wirkende Kraft erforderlich ist als bei einer Verformung senkrecht zur Längsrichtung durch eine senkrecht zur Längsrichtung wirkende Kraft. Insbesondere ist die Dichtmanschette über einen großen Verformungsweg bevorzugt reversibel verformbar, wobei vorzugsweise auf eine Materialbruchdehnung von zumindest 300 % abgestellt ist. In einer bevorzugten Ausführungsform weist das erste Teilrohr des Spülrohrs die Auskragung auf, an der die Dichtmanschette befestigt ist. Allgemein dient die Dichtmanschette einer fluiddichten Verbindung zwischen dem Anschlussrohr, dem die Dichtmanschette zugeordnet ist, und dem Ablaufstutzen bzw. Spülstutzen, an dem das jeweilige Anschlussrohr angeschlossen ist. Bevorzugt ist in dem Betriebszustand in jeder Betriebsposition die Dichtmanschette von der Rohrdichtung in Längsrichtung beabstandet, insbesondere um zumindest 5 %, insbesondere um zumindest 10 % der Längserstreckung des Teilrohrs, an dem die Dichtmanschette befestigt ist. In einer bevorzugten Ausführungsform weist das zweite Teilrohr des Ablaufanschlussrohrs die Auskragung auf, an der die Dichtmanschette befestigt ist. Vorzugsweise weisen das erste Teilrohr des Spülrohrs und das zweite Teilrohr des Ablaufrohranschlussrohrs jeweils eine Auskragung mit vorgenannten Merkmalen auf, an der jeweils eine Dichtmanschette mit vorgenannten Merkmalen befestigt ist. Durch die wie oben erläuterte Ausführung der Dichtmanschette und ihrer Anordnung an dem jeweiligen Längsende ist in dem montierten Zustand auch bei größeren Fertigungsabweichungen des Spülstutzens bzw. des Ablaufstutzens eine fluiddichte Verbindung gewährleistet.

In einer bevorzugten Ausführungsform weist das zweite Teilrohr des Ablaufanschlussrohrs an seinem zweiten Rohrende eine Dichtmanschette auf zum fluiddichten Anschluss an den Ablaufstutzen und an seinem von dem zweiten Rohrende wegweisenden Rohrende eine Rohrdichtung auf. Insbesondere weist das erste Teilrohr des Spülanschlussrohrs an seinem ersten Rohrende eine Dichtmanschette zum fluiddichten Anschluss an den Spülstutzen und an seinem von dem ersten Rohrende wegweisenden Rohrende eine Rohrdichtung auf. Insbesondere ist die Dichtmanschette von der Rohrdichtung um zumindest 50 %, insbesondere um zumindest 70 %, insbesondere um zumindest 85 % der Längserstreckung jenes Teilrohrs beabstandet, das die Dichtmanschette und die Rohrdichtung aufweist. Bevorzugt erstreckt sich die Dichtmanschette ausgehend von einem Abschnitt, mit dem sie an dem Teilrohr anliegt und an dem sie befestigt ist, senkrecht zur Längsrichtung in eine Richtung, die einer Richtung entgegengerichtet ist, in der sich die Rohrdichtung senkrecht zur Längsrichtung erstreckt, ausgehend von einem Abschnitt, mit dem die Rohrdichtung an dem Teilrohr anliegt und an dem sie befestigt ist. Die Erfinder haben erkannt, dass es besonders vorteilhaft ist, die Rohrdichtung und die Dichtmanschette an einem gleichen Teilrohr vorzusehen, um eine möglichst einfache Gestaltung des korrespondierend zu diesem Teilrohr ausgebildeten Teilrohrs zu realisieren. Dadurch ist es ermöglicht, das Teilrohr, an dem weder die Dichtmanschette noch die Rohrdichtung angeordnet ist, besonders effizient herzustellen, beispielsweise mit Extrusionsverfahren.

In einer bevorzugten Ausführungsform weist zumindest eines der Teilrohre an seiner Außenseite in zumindest einem Rohrendabschnitt, der ein solches seiner Rohrenden ausbildet, das in dem bestimmungsgemäßen Betriebszustand des Anschlussrohrs in das andere der Teilrohre gesteckt ist oder eines der Längsenden des Anschlussrohrs ausbildet, eine Einstecktiefenmarkierung auf. Die Erfinder haben erkannt, dass eine solche Einstecktiefenmarkierung den besonderen Vorteil mit sich bringt, dass ein Monteur während des Anschließens des WC-Körpers mittels des Anschlussrohrs an einen gebäudeseitigen Spülanschluss bzw. Ablaufanschluss besonders zuverlässig feststellen kann, ob der Rohrendabschnitt weit genug mit dem anderen Teilrohr bzw. dem Anschluss bzw. Stutzen überlappt, damit eine zuverlässig abdichtende Verbindung zwischen dem Teilrohr und dem anderen Teilrohr bzw. dem Anschluss bzw. Stutzen hergestellt ist. Denn durch das Vorsehen der Einstecktiefenmarkierung an der Außenseite kann die Einstecktiefenmarkierung von einem Monteur während des Anschließens einfach wahrgenommen werden. Indem die Einstecktiefenmarkierung in dem Rohrendabschnitt des Teilrohrs vorgesehen ist, der im bestimmungsgemäßen Betriebszustand des Anschlussrohrs in das andere Teilrohr gesteckt ist, kann die Einstecktiefe besonders gut überwachbar sein. Indem die Einstecktiefenmarkierung in dem Rohrendabschnitt des Teilrohrs vorgesehen ist, der eines der Längsenden des Teilrohrs ausbildet, kann die Einstecktiefe in einen gebäudeseitigen Anschluss oder in einen WC-Körper seitigen Stutzen oder die Aufstecktiefe auf einen gebäudeseitigen Anschluss oder auf einen WC-Körper seitigen Stutzen besonders gut überwachbar sein. Einstecktiefe bzw. Aufstecktiefe entsprechen bevorzugt einer Überlappungslänge des Teilrohrs in Längsrichtung mit dem anderen Teilrohr bzw. Anschluss bzw. Stutzen, in den bzw. auf den das Teilrohr gesteckt ist. Beispielsweise kann die Aufstecktiefe beim Aufstecken eines Teilrohrs auf einen Stutzen des WC-Körpers dadurch überwacht werden, dass eine Position der Einstecktiefenmarkierung relativ zum WC-Körper überwacht wird. Besonders bevorzugt ist das Vorsehen der Einstecktiefenmarkierung in einem solchen Rohrendabschnitt, der zum Anschließen des Anschlussrohrs an einen Stutzen des WC-Körpers bzw. an einen gebäudeseitigen Anschluss bestimmungsgemäß in den Stutzen bzw. Anschluss zu stecken ist, da dann die Position der Einstecktiefenmarkierung relativ zu dem Stutzen bzw. Anschluss, die von einem Monteur während des Anschließens leicht wahrnehmbar ist, eine hinreichende Einstecktiefe und somit hinreichende Überlappung angeben kann. Das Teilrohr kann in seinen beiden Rohrendabschnitten jeweils eine wie vorliegend erläuterte Einstecktiefenmarkierung aufweisen. Beide Teilrohre können jeweils in zumindest einem ihrer Rohrendabschnitte eine wie vorliegend erläuterte Einstecktiefenmarkierung aufweisen. Beispielsweise kann die Einstecktiefenmarkierung in dem Teleskopabschnitt des Teilrohrs vorgesehen sein. Beispielsweise ist das Anschlussrohr als Spülanschlussrohr ausgebildet, wobei das Spülanschlussrohr mit seinem von seinem ersten Teilrohr ausgebildeten ersten Längsende an dem Spülstutzen anschließbar ist, und wobei sein zweites Teilrohr in seinem Teleskopabschnitt, mit dem es in sein erstes Teilrohr gesteckt ist, eine Einstecktiefenmarkierung aufweist. Beispielsweise ist das Anschlussrohr als Ablaufanschlussrohr ausgebildet, wobei das Ablaufanschlussrohr mit seinem von seinem zweiten Teilrohr ausgebildeten zweiten Längsende an dem Ablaufstutzen anschließbar ist, und wobei sein zweites Teilrohr in seinem Teleskopabschnitt, mit dem es in sein erstes Teilrohr gesteckt ist, und/oder sein erstes Teilrohr in seinem Rohrendabschnitt, der das erste Längsende des Ablaufanschlussrohrs ausbildet, mit dem es zum Anschließen an einen gebäudeseitigen Ablaufanschluss in diesen einsteckbar ist, und/oder sein zweites Teilrohr in seinem Rohrendabschnitt, der das zweite Längsende des Ablaufanschlussrohrs ausbildet, mit dem es zum Anschließen an einen Ablaufstutzen eines WC-Körpers auf diesen aufsteckbar ist, eine Einsteckmarkierung aufweist. Bevorzugt erstreckt sich der Rohrendabschnitt ausgehend von dem Rohrende des Teilrohrs, das er ausbildet, über maximal 1,5 cm, insbesondere maximal 2 cm, insbesondere maximal 3 cm, insbesondere maximal 5 cm zum gegenüberliegenden Rohrende des Teilrohrs hin, wobei die Längenangabe sich bevorzugt auf die Erstreckungslänge in der erläuterten Längsrichtung bezieht. Dadurch ist sichergestellt, dass die Einstecktiefenmarkierung ausreichend nah am Rohrende des Teilrohrs angeordnet ist, um gerade in kritischen Aufstecksituationen eine Überlappung mit einer noch hinreichenden Überlappungslänge zur Gewährleistung der zuverlässig abdichtenden Verbindung sicherstellen zu können. In einer Ausführungsform ist die Einstecktiefenmarkierung in ihrer Erstreckung auf den Rohrendabschnitt beschränkt, in einer anderen Ausführungsform erstreckt sich die Einstecktiefenmarkierung über den Rohrendabschnitt hinaus, wodurch auch eine erhebliche Überlappungslänge im angeschlossenen Zustand noch zuverlässig kontrolliert werden kann. Bevorzugt erstreckt sich die Einstecktiefenmarkierung über mindestens 1 cm, insbesondere mindestens 2 cm in Längsrichtung hinweg, wobei die Einstecktiefenmarkierung bevorzugt diskrete, in Längsrichtung voneinander beabstandete Markierungselemente aufweist, so dass ein jedes der Markierungselemente einen festgelegten Abstand vom Rohrende aufweist und somit anhand des Markierungselements, das nach dem Ineinanderstecken des Teilrohrs mit dem anderen Teilrohr bzw. dem Anschluss bzw. Stutzen an dem Teilrohr bzw. Anschluss bzw. Stutzen liegt, die Überlappungslänge abgeschätzt werden kann. Bevorzugt verläuft die Außenseite des Teilrohrs über 360° um eine Längsachse des Teilrohrs geschlossen umlaufend, wobei die Außenseite in drei Außenseitenabschnitte aufteilbar ist, die unmittelbar aneinander angrenzen und die gemeinsam vollständig um die Längsachse umlaufen und jeweils über 120° um die Längsachse umlaufen, wobei sich die Einstecktiefenmarkierung innerhalb eines jeden der Außenseitenabschnitte erstreckt. Hierdurch kann die Wahrnehmbarkeit der Einstecktiefenmarkierung besonders begünstigt sein. Die Einstecktiefenmarkierung kann beispielsweise durch eine Prägung in dem Teilrohr ausgebildet sein, beispielsweise kann das Teilrohr mittels Spritzgießverfahrens hergestellt und die Einstecktiefenmarkierung während des Spritzgießverfahrens hergestellt sein. Die Einstecktiefenmarkierung kann beispielsweise durch eine Auftragung ausgebildet sein, wobei die Auftragung beispielsweise eine Bedruckung oder ein aufgebrachtes Etikett sein kann, so dass beispielsweise das Teilrohr herstellbar ist, indem zunächst ein Rohr hergestellt wird und anschließend die Auftragung auf das Rohr aufgebracht wird.

Die Erfindung umfasst ferner ein Spülanschlussrohr für eine erfindungsgemäße Anschlussgarnitur, wobei das Spülanschlussrohr ein erstes Teilrohr umfasst, das das erste Längsende des Spülanschlussrohrs ausbildet, sowie ein zweites Teilrohr umfasst, das das zweite Längsende des Spülanschlussrohrs ausbildet, wobei in einem bestimmungsgemäßen Betriebszustand des Spülanschlussrohrs die Teilrohre zueinander verschiebbar ineinander gesteckt sind und eine Längserstreckungslänge des Spülanschlussrohrs zwischen seinen Längsenden durch eine Längsverschiebung der Teilrohre zueinander einstellbar ist. Selbstverständlich können von dieser Erfindung umfasste vorteilhafte Ausführungsformen dieses Spülanschlussrohrs eines oder mehrere Merkmale umfassen, die im Zusammenhang mit Ausführungsformen der vorgehend beschriebenen Anschlussgarnitur offenbart sind.

Die Erfindung umfasst ferner ein Ablaufanschlussrohr für eine erfindungsgemäße Anschlussgarnitur, wobei das Ablaufanschlussrohr ein erstes Teilrohr umfasst, das das erste Längsende des Ablaufanschlussrohrs ausbildet, sowie ein zweite Teilrohr, das das zweite Längsende des Ablaufanschlussrohrs ausbildet, wobei in dem bestimmungsgemäßen Betriebszustand des Ablaufanschlussrohrs die Teilrohre zueinander verschiebbar ineinander gesteckt sind und eine Längserstreckungslänge des Ablaufanschlussrohrs zwischen seinen Längsenden durch eine Längsverschiebung der Teilrohre zueinander einstellbar ist. Selbstverständlich kann erfindungsgemäß das Ablaufanschlussrohr in vorteilhaften Ausführungsformen eines oder mehrere Merkmale aufweisen, die im Zusammenhang mit der vorhergehend beschriebenen erfindungsgemäßen Anschlussgarnitur offenbart sind.

Die Erfindung umfasst ferner die Verwendung einer erfindungsgemäßen Anschlussgarnitur zur Montage eines WC-Körpers an einer gebäudeseitigen Wand. Der WC-Körper weist einen Spülstutzen und einen Ablaufstutzen auf. Die Wand weist einen gebäudeseitigen Spülanschluss und einen gebäudeseitigen Ablaufanschluss auf. Zur Montage des WC-Körpers an der gebäudeseitigen Wand wird ein Spülanschlussrohr mit seinem ersten Längsende an den Spülstutzen und mit seinem zweiten Längsende an den gebäudeseitigen Spülanschluss und ein Ablaufanschlussrohr mit seinem ersten Längsende an den gebäudeseitigen Ablaufanschluss und mit seinem zweiten Längsende an den Ablaufstutzen angeschlossen unter Realisierung einer fluidführenden Verbindung zwischen dem Spülstutzen und dem gebäudeseitigen Spülanschluss sowie zwischen dem Ablaufstutzen und dem gebäudeseitigen Ablaufanschluss. Bevorzugt wird eine gegenüber einer Umgebung fluiddichte Verbindung zwischen dem ersten Längsende des Spülanschlussrohrs und dem Spülstutzen, dem zweiten Längsende des Spülanschlussrohrs und dem gebäudeseitigen Spülanschluss, dem ersten Längsende des Ablaufanschlussrohrs und dem gebäudeseitigen Ablaufanschluss und dem zweiten Längsende des Ablaufanschlussrohrs und dem Ablaufstutzen hergestellt. In einem ersten Schritt wird ein erstes Teilrohr des Spülanschlussrohrs mit dem ersten Längsende an den Spülstutzen und ein von diesem ersten Teilrohr getrenntes zweites Teilrohr des Spülanschlussrohrs mit dem zweiten Längsende an den Spülanschluss angeschlossen. Währenddessen ist der WC-Körper von der Wand beabstandet. Alternativ oder zusätzlich wird in dem ersten Schritt ein erstes Teilrohr des Ablaufanschlussrohrs mit dem ersten Längsende an den Ablaufanschluss angeschlossen und ein von diesem getrenntes zweites Teilrohr des Ablaufanschlussrohrs mit dem zweiten Längsende an den Ablaufstutzen angeschlossen. Bevorzugt wird der WC-Körper anschließend gemeinsam mit dem ersten Teilrohr, insbesondere den ersten Teilrohren, dergestalt zur Wand ausgerichtet, dass das erste Teilrohr und das zweite Teilrohr des jeweils selben Anschlussrohrs fluchtend zueinander und insbesondere die zweiten Rohrenden der, insbesondere sämtlicher, Teilrohre voneinander beabstandet sind, wobei vorzugsweise die Teilrohre anschließend in dem ersten Schritt ineinander gesteckt werden, sodass insbesondere sie einander senkrecht zur Längsrichtung vollständig umschließen. Bevorzugt wird dabei das zweite Teilrohr in einen Innenraum des ersten Teilrohrs eingefügt. Anschließend wird in einem zweiten Schritt eine Längserstreckungslänge des Spülanschlussrohrs und/oder des Ablaufanschlussrohrs, insbesondere kontinuierlich, verringert, während der WC-Körper in Längsrichtung an die Wand bewegt wird. Bevorzugt wird der WC-Körper in dem zweiten Schritt so lange an die Wand bewegt, bis er mit einer Anlagefläche unmittelbar an der Zugangsseite der Wand anliegt. Insbesondere ist während des gesamten zweiten Schritts eine fluiddichte Verbindung zwischen dem ersten Teilrohr und dem ihm zugeordneten zweiten Teilrohr des Spülanschlussrohrs bzw. des Ablaufanschlussrohrs gewährleistet. Bevorzugt bleibt während der Bewegung des WC-Körpers an die Wand eine Position des zweiten Teilrohrs des Spülanschlussrohrs relativ zu der Wand und eine Position des ersten Teilrohrs des Spülanschlussrohrs relativ zu dem WC-Körper unverändert. Bevorzugt bleibt während der Bewegung des WC-Körpers an die Wand eine Position des ersten Teilrohrs des Ablaufanschlussrohrs relativ zu dem WC-Körper und eine Position des zweiten Teilrohrs des Ablaufanschlussrohrs relativ zu dem Ablaufanschluss unverändert.

Die Erfindung umfasst ferner eine WC-Anordnung umfassend einen, insbesondere freihängend, an einer Wand befestigten, einen Spülstutzen und einen Ablaufstutzen aufweisenden WC-Körper sowie eine erfindungsgemäße Anschlussgarnitur mit ihren Anschlussrohren in ihrem Betriebszustand. Ein als Spülanschlussrohr ausgebildetes fluidführendes Anschlussrohr ist mit seinem ersten Längsende an dem Spülstutzen und seinem zweiten Längsende an einem gebäudeseitigen Spülanschluss, insbesondere lösbar, angeschlossen und ein als Ablaufanschlussrohr ausgebildetes Anschlussrohr ist mit seinem ersten Längsende an dem Ablaufstutzen, insbesondere lösbar, fluidführend angeschlossen, insbesondere zum Verbinden des WC-Körpers mit dem gebäudeseitigen Spülanschluss und mit dem gebäudeseitigen Ablaufanschluss. Zumindest eines der Anschlussrohre umfasst ein erstes Teilrohr, das das erste Längsende des Anschlussrohrs ausbildet, sowie ein zweites Teilrohr, das das zweite Längsende des Anschlussrohrs ausbildet, wobei in einem bestimmungsgemäßen Betriebszustand des Anschlussrohrs die Teilrohre unter Ausbildung einer Betriebsposition zueinander verschiebbar ineinander gesteckt sind und eine Längserstreckungslänge des Anschlussrohrs zwischen seinen Längsenden durch eine Längsverschiebung der Teilrohre zueinander eingestellt ist. Ausführungsformen der WC-Anordnung können Merkmale umfassen, die im Zusammenhang mit gattungsgemäßen oder erfindungsgemäßen Anschlussgarnituren offenbart sind.

Die Erfindung umfasst ferner einen WC-Körper, der einen mit seiner Öffnung zu einer Anschlussseite des WC-Körpers weisenden Spülstutzen zum Anschluss an einen gebäudeseitigen Spülanschluss und einen mit seiner Öffnung zu der Anschlussseite weisenden Ablaufstutzen zum Anschluss an einen gebäudeseitigen Ablaufanschluss mittels einer erfindungsgemäßen Anschlussgarnitur umfasst. Insbesondere umfasst der WC-Körper ferner an seiner Anschlussseite eine Anlagefläche, die ausgebildet ist, in einem montierten Zustand an eine Zugangsseite einer Wand anzuliegen. Der Spülstutzen und der Ablaufstutzen sind beide mit ihrem von der Anschlussseite weg weisenden Ende von einem an der Anschlussseite ausgebildeten absoluten Ende des WC-Körpers um einen Abstandsbetrag von zumindest 50 mm, insbesondere von zumindest 60 mm, insbesondere von zumindest 75 mm, insbesondere von zumindest 80 mm beabstandet. Bevorzugt umfasst die Anschlussseite das absolute Ende des WC-Körpers. Bevorzugt ist mit dem von der Anschlussseite weg weisenden Ende ein absolutes Ende der Längserstreckung des Spülstutzens bzw. des Ablaufstutzens gemeint, wobei unter der Längserstreckung eine Erstreckung des Spülstutzens bzw. des Ablaufstutzens in dessen jeweilige Längsrichtung verstanden wird. Die jeweilige Längsrichtung des Spülstutzens bzw. des Ablaufstutzens verläuft dergestalt, dass, wenn der Spülstutzen mit dem Spülanschlussrohr und der Ablaufstutzen mit dem Ablaufanschlussrohr verbunden ist, die Längsrichtung des Spülstutzens mit der Längsrichtung des Spülanschlussrohrs und die Längsrichtung des Ablaufstutzens mit der Längsrichtung des Ablaufanschlussrohrs übereinstimmt. Bevorzugt sind der Spülstutzen und der Ablaufstutzen mit ihrem von der Anschlussseite weg weisenden Ende von dem von der Anschlussseite ausgebildeten absoluten Ende des WC-Körpers in Längsrichtung um einen, bevorzugt unterschiedlichen, Abstand beabstandet, der insbesondere zumindest 5 mm, insbesondere zumindest 10 mm, insbesondere zumindest 20 mm, insbesondere zumindest 25 mm, beträgt. Die Erfinder haben erkannt, dass die zu dem an der Anschlussseite ausgebildeten absoluten Ende des WC-Körpers beabstandete Anordnung Vorteile für eine Einstellbarkeit der Anschlussrohre der erfindungsgemäßen Anschlussgarnitur mit sich bringt. Denn zwischen dem Spül- bzw. Ablaufstutzen und dem absoluten Ende kann ein Abschnitt der Anschlussrohre angeordnet und zugleich zumindest abschnittsweise von dem WC-Körper verdeckt sein. So sind beispielsweise Ausführungsformen der Anschlussrohre ermöglicht, die einen möglichst großen Differenzbetrag zwischen der maximal vorgesehenen und der minimal vorgesehenen Längserstreckungslänge aufweisen.

Von der Erfindung ist zudem ein Verfahren zum Anschluss eines einen Spülstutzen und einen Ablaufstutzen aufweisenden WC-Körpers an einem gebäudeseitigen Spülanschluss und einen gebäudeseitigen Ablaufanschluss mittels einer erfindungsgemäßen Anschlussgarnitur umfasst, das zumindest einen im Zusammenhang mit vorstehend erläuterten erfindungsgemäßen oder vorteilhaften Ausführungsformen der Anschlussgarnitur und/oder seiner Verwendung offenbarten Verfahrensschritt umfasst.

Ferner umfasst die Erfindung ein Set umfassend eine erfindungsgemäße Anschlussgarnitur und einen erfindungsgemäßen WC-Körper.

Die erfindungsgemäße Anschlussgarnitur, ihre erfindungsgemäßen Bestandteile, die erfindungsgemäße Verwendung und der erfindungsgemäße WC-Körper können jeweils Merkmale aufweisen, die im Zusammenhang mit gattungsgemäßen Anschlussgarnituren erläutert und in bevorzugten Ausführungsformen jeweils zu einer der anderen erfindungsgemäßen Lösungen genannt sind.

Die Erfindung wird nachfolgend unter Bezugnahme auf zwei Figuren anhand eines Ausführungsbeispiels näher erläutert.

Es zeigen:
- Figur 1:: eine Verwendung des Ausführungsbeispiels der erfindungsgemäßen Anschlussgarnitur zur Montage eines erfindungsgemäßen WC-Körpers an einer gebäudeseitigen Wand in einer schematischen Prinzipdarstellung;
- Figur 2:: das Ausführungsbeispiel der erfindungsgemäßen Anschlussgarnitur in einer schematischen Explosionsdarstellung und in einer schematischen Darstellung des Betriebszustands.

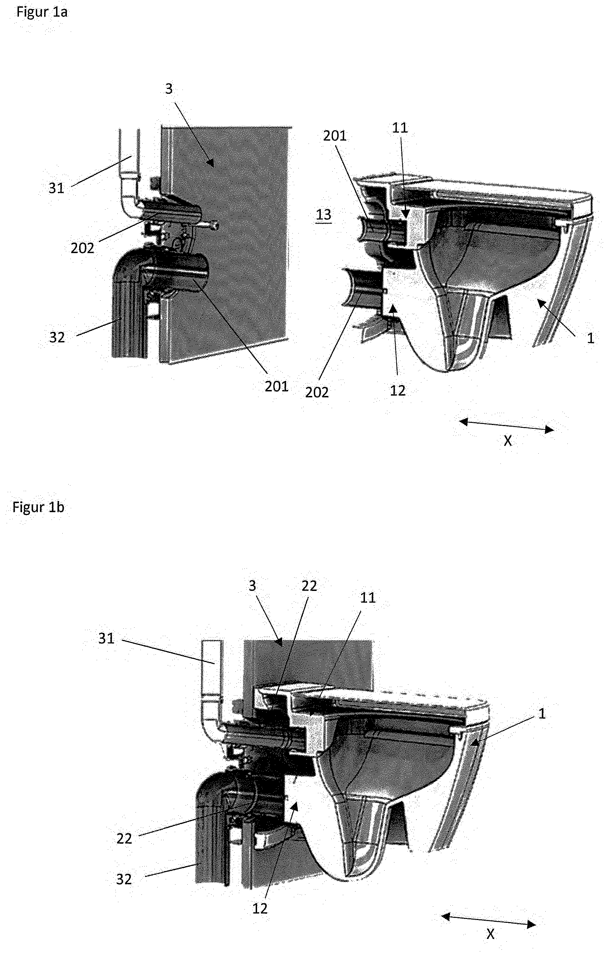

Figur 1 umfassend Figuren 1a und 1b zeigt die Verwendung eines Ausführungsbeispiels der erfindungsgemäßen Anschlussgarnitur zur Montage eines erfindungsgemäßen WC-Körpers 1 an einer gebäudeseitigen Wand 3 jeweils in schematischer Prinzipdarstellung. In Figur 1a ist ein erster Schritt der Verwendung gezeigt, wobei der WC-Körper 1 von der gebäudeseitigen Wand 3 entlang einer Längsrichtung X beabstandet ist. Der WC-Körper 1 ist bezogen auf die Längsrichtung X dergestalt ausgerichtet, dass dessen Anschlussseite 13 zu einer Zugangsseite der gebäudeseitigen Wand 3 weist. An der Wand 3 sind ein gebäudeseitiger Spülanschluss 31 und ein gebäudeseitiger Ablaufanschluss 32 angeordnet, die jeweils mit ihren Öffnungen in Längsrichtung X zu dem WC-Körper 1 weisen.

Die gebäudeseitige Wand 3 umfasst eine tragende Wand sowie eine zur tragenden Wand beabstandete Vorwand, die eine Raumseite und damit die Zugangsseite der gebäudeseitigen Wand 3 ausbildet, an der der WC-Körper anliegend befestigt wird, wobei die Anschlüsse 31, 32 zwischen der tragenden Wand und der Vorwand angeordnet sind, was allgemein vorteilhaft ist. Der WC-Körper 1 weist einen Spülstutzen 11 und einen Ablaufstutzen 12 auf, die bezogen auf die Längsrichtung X von einem absoluten Ende der Anschlussseite 13 des WC-Körpers 1 um einen unterschiedlichen Abstand beabstandet sind. An den Spülstutzen 11 ist ein erstes Teilrohr 201 des Spülanschlussrohrs 21, an den Ablaufstutzen 12 ist ein zweites Teilrohr 202 des Ablaufanschlussrohrs 22, an dem gebäudeseitigen Spülanschluss 31 ist ein zweites Teilrohr 202 des Spülanschlussrohrs 21 und an dem gebäudeseitigen Ablaufanschluss 32 ist ein erstes Teilrohr 201 des Ablaufanschlussrohrs 22 angeschlossen. Das erste Teilrohr 201 und das zweite Teilrohr 202 des Spülanschlussrohrs 21 sind zueinander fluchtend ausgerichtet und in Längsrichtung X voneinander beabstandet. Auch das erste Teilrohr 201 und das zweite Teilrohr 202 des Ablaufanschlussrohrs 22 sind zueinander fluchtend ausgerichtet und voneinander entlang der Längsrichtung X beabstandet. Ausgehend von dieser Position sind die Teilrohre 201, 202 miteinander verbindbar, indem der WC-Körper 1 gemeinsam mit den am ihm befestigten Teilrohren 201, 202 in Längsrichtung X zur Wand 3 bewegt wird. Bevor der WC-Körper 1 an der Wand 3 zum Anliegen kommt, werden die ersten Teilrohre 201 und die zweiten Teilrohre 202 ineinander gesteckt unter Annahme eines Betriebszustands der Anschlussgarnitur 200, in dem die Teilrohre 201, 202 fluiddicht verbunden und dabei relativ zueinander durch Längsverschiebung zum Erreichen verschiedener Betriebspositionen einstellbar sind. In Figur 1b ist in einer schematischen Prinzipdarstellung eine Betriebsposition der erfindungsgemäßen Anschlussgarnitur gezeigt, in der der WC-Körper 1 unmittelbar an der Wand 3 anliegt und an dem gebäudeseitigen Ablaufanschluss 32 mittels des Spülanschlussrohrs 21 und des Ablaufanschlussrohrs 22 fluidführend verbunden ist.

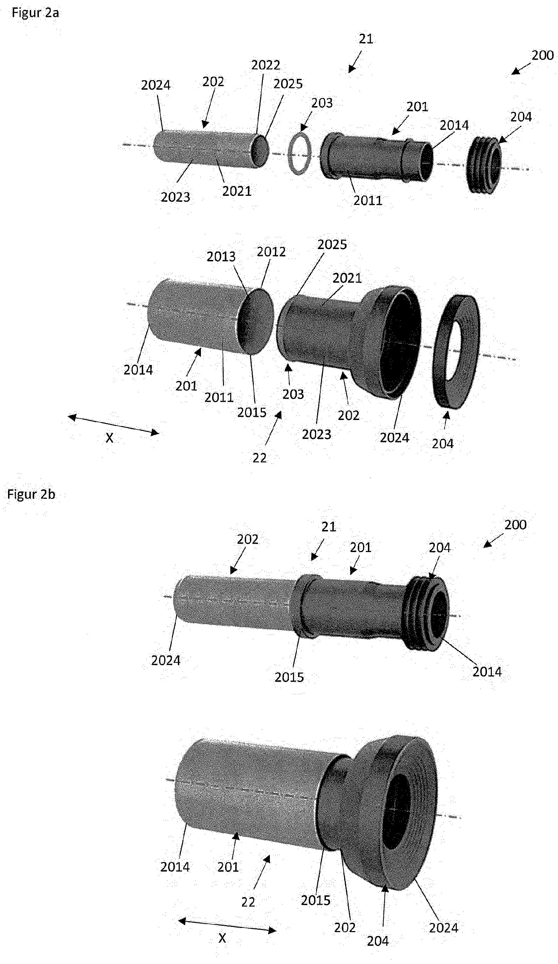

Figur 2 umfassend die Figuren 2a und 2b zeigt schematisch jeweils in einer Prinzipdarstellung die erfindungsgemäße Anschlussgarnitur 200 umfassend das Spülanschlussrohr 21 und das Ablaufanschlussrohr 22. In Figur 2a ist die Anschlussgarnitur 200 in einer Explosionsansicht gezeigt, in der die Bestandteile des Spülanschlussrohrs 21 und die Bestandteile des Ablaufanschlussrohrs 22 jeweils zueinander fluchtend an einer gestrichelt dargestellten, in Längsrichtung X verlaufenden Längsachse ausgerichtet sind. Jedes dieser Anschlussrohre 21, 22 weist ein erstes Teilrohr 201 mit einem ersten Längsende 2014 des Anschlussrohrs 21, 22 und ein zweites Teilrohr 202 mit einem zweiten Längsende 2024 des Anschlussrohrs 21, 22 auf, wobei jedes Teilrohr jeweils ein zu dem neben ihm angeordneten Teilrohr weisendes, korrespondierendes zweites Rohrende 2015, 2025 ausbildet. Dabei ist eine Längserstreckungslänge des jeweiligen Anschlussrohrs durch Längsverschiebung eines von dem ersten Teilrohr 201 ausgebildeten ersten Teleskopabschnitts 2011 und eines von dem zweiten Teilrohr 202 ausgebildeten Teleskopabschnitts 2021 relativ zueinander einstellbar. An seinem von dem zweiten Längsende 2024 des Spülanschlussrohrs 21 abgewandten Rohrende 2025 weist das zweite Teilrohr 202 eine Einlaufschräge 2022 auf, die ausgebildet ist, den Teleskopabschnitt 2021 in und an eine an dem ersten Teilrohr 201 befestigte Rohrdichtung 203 zu führen. An einer längsendseitigen Auskragung des ersten Teilrohrs 201 des Spülanschlussrohrs 21 ist eine Dichtmanschette 204 angeordnet ist. Das Ablaufanschlussrohr 22 ist im Wesentlichen analog zu dem Spülanschlussrohr 21 aufgebaut, wobei dessen erstes Teilrohr 201 und dessen zweites Teilrohr 202 gegenüber den Teilrohren 201, 202 des Spülanschlussrohrs 21 eine größere Erstreckung senkrecht zur Längsrichtung aufweist und an einen gemäß DN90-normierten gebäudeseitigen Ablaufanschluss 32 anschließbar ist. Ferner ist eine Rohrdichtung 203 auf der Außenseite 2023 des zweiten Rohrendes 2025 des zweiten Teilrohrs 202 des Ablaufanschlussrohrs 22 formschlüssig befestigt. Die Rohrdichtung 203 des Spülanschlussrohrs 21 ist auf der Innenseite 2013 des ersten Teilrohrs positionsfest befestigbar. Die zweiten Teilrohre 202 sind ausgebildet, in dem Betriebszustand in dem dazu jeweils korrespondierend ausgebildeten ersten Teilrohr 201 angeordnet zu werden, so dass eine Innenseite 2013 des ersten Teilrohrs 201 innerhalb der Teleskopabschnitte 2011, 2021 zu der Außenseite 2023 des zweiten Teilrohrs 202 weist. Das Ablaufanschlussrohr 22 weist ferner eine Dichtmanschette 204 auf, die an dem zweiten Längsende 2024 des Ablaufanschlussrohrs 22 befestigt ist.

In Figur 2b ist die erfindungsgemäße Anschlussgarnitur 200 im Betriebszustand schematisch dargestellt. In diesem Betriebszustand ist jeweils das zweite Teilrohr 202 in das erste Teilrohr 201 über einen Teil der Erstreckung der Teleskopabschnitte 2011, 2021 eingesteckt, wobei das Spülanschlussrohr 21 und das Ablaufanschlussrohr 22 jeweils zwischen einer minimalen Längserstreckungslänge und einer maximalen Längserstreckungslänge längsverschiebbar auf eine gewünschte Betriebsposition eingestellt ist.

### Bezugszeichenliste

- 1: WC-Körper
- 3: Wand
- 11: Spülstutzen
- 12: Ablaufstutzen
- 13: Anschlussseite
- 21: Spülanschlussrohr
- 22: Ablaufanschlussrohr
- 31: Spülanschluss
- 32: Ablaufanschluss
- 200: Anschlussgarnitur
- 201: erstes Teilrohr
- 202: zweites Teilrohr
- 203: Rohrdichtung
- 204: Dichtmanschette
- 2011: Teleskopabschnitt des ersten Teilrohrs
- 2012: Einlaufschräge des ersten Teilrohrs
- 2013: Innenseite des ersten Teilrohrs
- 2014: erstes Längsende des Anschlussrohrs
- 2015: zweites Rohrende des ersten Teilrohrs
- 2021: Teleskopabschnitt des zweiten Teilrohrs
- 2022: Einlaufschräge des zweiten Teilrohrs
- 2023: Außenseite des zweiten Teilrohrs
- 2024: zweites Längsende des Anschlussrohrs
- 2025: Zweites Rohrende des zweiten Teilrohrs
- X: Längsrichtung

## Patentansprüche

1. Anschlussgarnitur (200) zum Anschluss eines WC-Körpers (1), der einen Spülstutzen (11) und einen Ablaufstutzen (12) aufweist, die Anschlussgarnitur (200) umfassend als fluidführende Anschlussrohre ein Spülanschlussrohr (21), das mit seinem ersten Längsende (2014) an den Spülstutzen (11) und mit seinem zweiten Längsende (2024) an einen gebäudeseitigen Spülanschluss (31) anschließbar ist, sowie ein Ablaufanschlussrohr (22), das mit seinem ersten Längsende (2014) an einen gebäudeseitigen Ablaufanschluss (32) und mit seinem zweiten Längsende (2024) an den Ablaufstutzen (12) anschließbar ist,
**dadurch gekennzeichnet, dass**
zumindest eines der Anschlussrohre ein erstes Teilrohr (201) umfasst, das das erste Längsende (2014) des Anschlussrohrs ausbildet, sowie ein zweites Teilrohr (202) umfasst, das das zweite Längsende (2024) des Anschlussrohrs ausbildet, wobei in einem bestimmungsgemäßen Betriebszustand des Anschlussrohrs die Teilrohre (201, 202) zueinander verschiebbar ineinander gesteckt sind und eine Längserstreckungslänge des Anschlussrohrs zwischen seinen Längsenden (2014, 2024) durch eine Längsverschiebung der Teilrohre (201, 202) zueinander einstellbar ist.

2. Anschlussgarnitur (200) nach Anspruch 1,
**dadurch gekennzeichnet, dass**
die Teilrohre (201, 202) jeweils einen Teleskopabschnitt (2011, 2021) aufweisen, wobei in dem Betriebszustand eines der Teilrohre (201, 202) mit seinem Teleskopabschnitt (2011, 2021) in dem Teleskopabschnitt (2011, 2021) des anderen Teilrohrs (201, 202) angeordnet ist, wobei die Teilrohre (201, 202) in dem Betriebszustand zwischen einer ersten Betriebsposition, in der das Anschlussrohr eine maximal vorgesehene Längserstreckungslänge aufweist, und einer zweiten Betriebsposition, in der das Anschlussrohr eine minimal vorgesehene Längserstreckungslänge aufweist, durch die Längsverschiebung relativ zueinander verschiebbar sind, wobei in der zweiten Betriebsposition sich die Teleskopabschnitte (2011, 2021) mit ihren Längserstreckungslängen vollständig überlappen, wobei insbesondere zumindest einer der Teleskopabschnitte (2011, 2021) über mindestens 70 % seiner Längserstreckungslänge hinweg eine gleiche Außenkontur und/oder eine gleiche Innenkontur aufweist.

3. Anschlussgarnitur (200) nach Anspruch 2,
**dadurch gekennzeichnet, dass**
der Teleskopabschnitt (2011) des ersten Teilrohrs (201) starr mit dem ersten Längsende (2014) des Anschlussrohrs verbunden ist, wobei insbesondere das erste Teilrohr (201) als einstückiges Bauteil hergestellt ist, und/oder dass der Teleskopabschnitt (2012) des zweiten Teilrohrs (202) starr mit dem zweiten Längsende (2024) des Anschlussrohrs verbunden ist, wobei insbesondere das zweite Teilrohr (202) als einstückiges Bauteil hergestellt ist.

4. Anschlussgarnitur (200) nach einem der vorangehenden Ansprüche,
**dadurch gekennzeichnet, dass**
eine ringförmige Rohrdichtung (203) vorgesehen ist, die die beiden Teilrohre (201, 202) zueinander in dem Betriebszustand fluiddicht verbindet.

5. Anschlussgarnitur (200) nach einem der vorangehenden Ansprüche,
**dadurch gekennzeichnet, dass**
die Teilrohre (201, 202) jeweils ein erstes und ein zweites Rohrende aufweisen, wobei die zweiten Rohrenden (2015, 2025) der Teilrohre zueinander korrespondierend ausgebildet sind und die beiden Teilrohre (201, 202) in dem Betriebszustand mit ihren beiden zweiten Rohrenden (2015, 2025) ineinander gesteckt sind, wobei die ersten Rohrenden der Teilrohre (201, 202) unterschiedlich zueinander und jeweils unterschiedlich zu den zweiten Rohrenden (2015, 2025) beider Teilrohre (201, 202) ausgebildet sind, wobei ausschließlich die beiden zweiten Rohrenden (2015, 2025) als zueinander korrespondierende Rohrenden ausgebildet sind.

6. Anschlussgarnitur (200) nach einem der Ansprüche 4 bis 5, **dadurch gekennzeichnet, dass**
die Rohrdichtung (203) an einem von dem durch das erste Teilrohr (201) ausgebildeten Längsende (2024) des Anschlussrohrs beabstandeten Abschnitt des ersten Teilrohrs (201) oder an einem von dem durch das zweite Teilrohr (202) ausgebildeten Längsende (2024) des Anschlussrohrs beabstandeten Abschnitt des zweiten Teilrohrs (202) positionsfest angeordnet ist.

7. Anschlussgarnitur (200) nach einem der vorangehenden Ansprüche,
**dadurch gekennzeichnet, dass**
das erste und das zweite Teilrohr (201, 202) separat voneinander ausgebildet sind und in dem Betriebszustand lösbar miteinander verbunden sind, wobei sie ausgehend von dem Betriebszustand durch Längsverschiebung über die maximal vorgesehene Längserstreckungslänge hinaus voneinander trennbar sind.

8. Anschlussgarnitur (200) nach einem der Ansprüche 4 bis 7, **dadurch gekennzeichnet, dass**
die Teilrohre (201, 202) ausgehend von einem Montagezustand, in dem die Teilrohre (201, 202) in Längsrichtung (X) voneinander beabstandet sind, mittels einer in Längsrichtung (X) verlaufenden Fügebewegung ineinander steckbar sind zum Erreichen des Betriebszustands, wobei insbesondere zumindest eines der Teilrohre (201, 202) an seinem in dem Betriebszustand mit dem anderen Teilrohr (201, 202) überlappenden Rohrende (2015, 2025) eine umlaufende Einlaufschräge (2012, 2022) aufweist zum zunehmenden Aufbau einer Presskraft auf die Rohrdichtung (203) während der Fügebewegung.

9. Anschlussgarnitur (200) nach einem der vorangehenden Ansprüche,
**dadurch gekennzeichnet, dass**
das Ablaufanschlussrohr (22) an seinem ersten Längsende (2014) einen Rohranschluss zum Verbinden mit einem gemäß DN90 normierten gebäudeseitigen Ablaufanschluss (32) aufweist, und/oder an seinem zweiten Längsende (2024) einen Rohranschluss zum Verbinden mit einem gemäß DN90 normierten Ablaufstutzen (12) aufweist.

10. Anschlussgarnitur (200) nach einem der vorangehenden Ansprüche,
**dadurch gekennzeichnet, dass**
zumindest eines der Teilrohre (201, 202) an dem von ihm ausgebildeten Längsende (2014, 2024) des Anschlussrohrs eine Auskragung aufweist, an der eine Dichtmanschette (204) befestigt ist.

11. Anschlussgarnitur (200) nach Anspruch 10,
**dadurch gekennzeichnet, dass**
das zweite Teilrohr (202) des Ablaufanschlussrohrs (22) an seinem zweiten Längsende (2024) die Dichtmanschette (204) zum fluiddichten Anschluss an den Ablaufstutzen (12) und an seinem von dem zweiten Längsende (2024) weg weisenden Rohrende die Rohrdichtung (203) aufweist und/oder dass das erste Teilrohr (201) des Spülanschlussrohrs (21) an seinem ersten Längsende (2014) die Dichtmanschette (204) zum fluiddichten Anschluss an den Spülstutzen (11) und an seinem von dem ersten Längsende (2014) weg weisenden Rohrende die Rohrdichtung (203) aufweist.

12. Anschlussgarnitur (200) nach einem der vorangehenden Ansprüche,
**dadurch gekennzeichnet, dass**
zumindest eines der Teilrohre (201, 202) an seiner Außenseite in zumindest einem Rohrendabschnitt, der ein solches seiner Rohrenden ausbildet, das in dem bestimmungsgemäßen Betriebszustand des Anschlussrohrs in das andere der Teilrohre (201, 202) gesteckt ist oder eines der Längsenden (2014, 2024) des Anschlussrohrs ausbildet, eine Einstecktiefenmarkierung aufweist, wobei insbesondere die Einstecktiefenmarkierung durch eine Prägung in dem Teilrohr (201, 202) und/oder durch eine Auftragung, insbesondere eine Bedruckung oder ein aufgebrachtes Etikett, ausgebildet ist.

13. Spülanschlussrohr (21) für eine Anschlussgarnitur (200) nach einem der Ansprüche 1 bis 12,
**dadurch gekennzeichnet, dass**
das Spülanschlussrohr (21) ein erstes Teilrohr (201) umfasst, das das erste Längsende (2014) des Spülanschlussrohrs (21) ausbildet, sowie ein zweites Teilrohr (202) umfasst, das das zweite Längsende (2024) des Spülanschlussrohrs (21) ausbildet, wobei in dem bestimmungsgemäßen Betriebszustand des Spülanschlussrohrs (21) die Teilrohre (201, 202) zueinander verschiebbar ineinander gesteckt sind und eine Längserstreckungslänge des Spülanschlussrohrs (21) zwischen seinen Längsenden (2014, 2024) durch eine Längsverschiebung der Teilrohre zueinander einstellbar ist.

14. Ablaufanschlussrohr (22) für eine Anschlussgarnitur (200) nach einem der Ansprüche 1 bis 12,
**dadurch gekennzeichnet, dass**
das Ablaufanschlussrohr (22) ein erstes Teilrohr (201) umfasst, das das erste Längsende (2014) des Ablaufanschlussrohrs (22) ausbildet, sowie ein zweites Teilrohr (202) umfasst, das das zweite Längsende (2024) des Ablaufanschlussrohrs (22) ausbildet, wobei in dem bestimmungsgemäßen Betriebszustand des Ablaufanschlussrohrs (22) die Teilrohre (201, 202) zueinander verschiebbar ineinander gesteckt sind und eine Längserstreckungslänge des Ablaufanschlussrohrs (22) zwischen seinen Längsenden (2014, 2024) durch eine Längsverschiebung der Teilrohre zueinander einstellbar ist.

15. Verwendung einer Anschlussgarnitur (200) nach einem der Ansprüche 1 bis 12 zur Montage eines WC-Körpers (1), der einen Spülstutzen (11) und einen Ablaufstutzen (12) aufweist, an einer gebäudeseitigen Wand (3), die einen gebäudeseitigen Spülanschluss (31) und einen gebäudeseitigen Ablaufanschluss (32) aufweist, wobei ein Spülanschlussrohr (21) mit seinem ersten Längsende (2014) an den Spülstutzen (11) und mit seinem zweiten Längsende (2024) an einen gebäudeseitigen Spülanschluss (31) und ein Ablaufanschlussrohr (22) mit seinem ersten Längsende (2014) an einen gebäudeseitigen Ablaufanschluss (32) und mit seinem zweiten Längsende (2024) an den Ablaufstutzen (12) angeschlossen wird unter Realisierung einer fluidführenden Verbindung zwischen dem Spülstutzen (11) und dem gebäudeseitigen Spülanschluss (31) sowie zwischen dem Ablaufstutzen (12) und dem gebäudeseitigen Ablaufanschluss (32),
**dadurch gekennzeichnet, dass**
in einem ersten Schritt ein erstes Teilrohr (201) des Spülanschlussrohrs (21) mit dem ersten Längsende (2014) an den Spülstutzen (11) angeschlossen wird und ein von diesem ersten Teilrohr (201) getrenntes zweites Teilrohr (202) des Spülanschlussrohrs (21) mit dem zweiten Längsende (2024) an den Spülanschluss (31) angeschlossen wird, während der WC-Körper (1) in Längsrichtung (X) von der Wand (3) beabstandet ist, und anschließend in einem zweiten Schritt eine Längserstreckungslänge des Spülanschlussrohrs (21) verkürzt wird, während der WC-Körper (1) in Längsrichtung (X) an die Wand (3) bewegt wird, wobei, insbesondere zu Beginn des ersten Schritts, die Teilrohre des Spülanschlussrohrs (21) in Längsrichtung (X) voneinander beabstandet sind und während des ersten Schritts ineinander gesteckt werden, und/oder in dem ersten Schritt ein erstes Teilrohr (201) des Ablaufanschlussrohrs (22) mit dem ersten Längsende (2014) an den Ablaufstutzen (12) angeschlossen wird und ein von diesem ersten Teilrohr (201) getrenntes zweites Teilrohr (202) des Ablaufanschlussrohrs (22) mit dem zweiten Längsende (2024) an den Ablaufanschluss (32) angeschlossen wird, während der WC-Körper (1) in Längsrichtung (X) von der Wand (3) beabstandet ist, und anschließend in dem zweiten Schritt eine Längserstreckungslänge des Ablaufanschlussrohrs (22) verkürzt wird, während der WC-Körper (1) in Längsrichtung (X) an die Wand (3) bewegt wird, wobei insbesondere zu Beginn des ersten Schritts die Teilrohre (201, 202) des Ablaufanschlussrohrs (22) in Längsrichtung (X) voneinander beabstandet sind und während des ersten Schritts ineinander gesteckt werden.

16. WC-Körper (1) umfassend einen zu einer Anschlussseite (13) des WC-Körpers (1) weisenden Spülstutzen (11) zum Anschluss an einen gebäudeseitigen Spülanschluss (31) und einen zu der Anschlussseite (13) weisenden Ablaufstutzen (12) zum Anschluss an einen gebäudeseitigen Ablaufanschluss (32) mittels einer Anschlussgarnitur (200) nach einem der Ansprüche 1 bis 12,
**dadurch gekennzeichnet, dass**
der Spülstutzen (11) und der Ablaufstutzen (12) beide mit ihrem von der Anschlussseite (13) wegweisenden Ende von einem an der Anschlussseite (13) ausgebildeten absoluten Ende des WC-Körpers (1) um einen Abstandsbetrag von zumindest 50 mm, insbesondere zumindest 75 mm beabstandet ist.
